# EUROPEAN PATENT SPECIFICATION

(11) **EP 0 761 501 B1**
(45) Date of publication and mention of the grant of the patent: **17.01.2001**
(21) Application number: 96306258.3
(22) Date of filing: 29.08.1996
(51) Int. Cl.: B60R 1/02

(54) **A rear view mirror and method of assembly thereof**
Rückblickspiegel und Verfahren zu dessen Zusammenbau
Rétroviseur et son procédé de fabrication

(30) Priority: 29.08.1995 BR 9503231
(43) Date of publication of application: 12.03.1997
(73) Proprietor: METAGAL INDUSTRIA E COMERCIO LTDA., Diadema - Estado de Sao Paulo (BR)
(72) Inventor: Moreno, Ricardo Poveda, Sao Bernardo do Campo - S.P. (BR); Malateaux, Edison, Sao Bernardo do Campo - S.P. (BR); Anze, Fabio Koiti, Sao Paulo - S.P. (BR)
(74) Representative: Murgatroyd, Susan Elizabeth

(56) References cited:
- DE-A- 2 256 974
- DE-A- 3 641 363
- DE-U- 9 213 483
- US-A- 3 383 152

## Description

This invention relates to an internal or an external rear view mirror (RVM) and a method of assembly thereof.

External and internal rear view mirrors, for example for automotive vehicles, are known. These RVM's comprise the mirror itself, which provides the rear view, and preferably a base plate, which supports the mirror. A manual, mechanical or electrical mechanism may also be provided with which to adjust the position of the mirror or the mirror/base plate assembly. The assembly is normally provided in a housing which is secured to the vehicle body by an arm or a seating base means.

In order to assemble the mirror itself on the face of the base plate, a double sided, pressure sensitive, adhesive tape is usually used, with each face of the adhesive being protected originally by a respective liner. The adhesive is applied in such a way that one face adheres to the rear surface of the mirror and the other adheres to the front surface of the base plate. Therefore, an assembly is formed which comprises the mirror, the adhesive tape and the base plate. Alternatively, if no base plate is used the assembly comprises the mirror and the adhesive tape only, the tape acting as a shatterproof element.

The double sided adhesive tape is a high adhesion tape, capable of uniting the base plate to the mirror, and complying with the specifications determined by the manufacturers of automotive vehicles as well as those standards established by official standard bodies relating to the shatterproofing of the mirror upon impact.

According to these specifications and standards, the mirror should be submitted to an "impact test" in which it may break but not shatter, i.e., it may break but its pieces should not get loose from the base plate or, if no base plate is used, should not get loose one from the other, due to the adhesion means, in this case the adhesive tape.

Besides these functional characteristics, the means for adhering the mirror to the base plate, i.e. the adhesive tape, should also comply with other requirements, which are checked by tests, such as: heat exposure, resistance to ultra violet radiation and others. Considering the need to comply with these operational characteristics, the double sided adhesive tape should be made from a high technology material, different from the tapes used for other purposes, and which may be expensive.

The method of assembling the mirror, using double sided tape, includes the use of an already wound, double sided adhesive tape which is already cut to the mirror shape, in such a way that several "pieces" of the tape may be taken from the roll and used. Alternatively, double sided tape may be provided in separate pieces, the same shape as the mirror. An operator then takes out the protective liner from the adhesive tape and adheres it to the base plate or to the mirror and, if a base plate is used takes out the other protective liner and places the mirror on the base plate and adhesive tape assembly, under pressure.

This method of assembly of the mirror, although apparently simple, is not totally satisfactory in the context of a production line, as it is practically hand made and, as such, subject to unavoidable imperfections occurring in this type of work, as the quality of the final product depends upon the dexterity and conditions of the operator.

DE-A-3641363 is the basis for the preamble of the independent claims and discloses a mirror comprising a glass plate fixed to a carrier plate by means of an adhesive layer, which may be based on polyurethane and silicone.

It is an object of the present invention to address the aforementioned problems.

According to a first aspect of the present invention there is provided a rear view mirror comprising: a mirror which provides the rear view; an adhesive provided on the rear face of the mirror; a housing; a mirror moving mechanism for moving the mirror in the housing and a base which extends from the housing and serves to fix the housing to the body of a vehicle with which the mirror is to be used, characterized in that the adhesive comprises a layer of a hot-melt type adhesive, which is applied hot and which, after cooling, provides the fixing of the mirror in said housing.

According to a second aspect of the present invention there is provided a method of assembly of a rear view mirror, comprising: the movement of a mirror through a mirror feeding station in which an adhesive is applied to the rear face of the mirror characterised in that the adhesive is formed by a layer of hot-melt adhesive which is applied to said rear face as said mirror is moved continuously through said station, said adhesive layer hardening after cooling.

According to another aspect of the invention, there is provided a method of assembly of a rear view mirror comprising the steps of:-
applying a layer of a hot-melt adhesive to a base plate and
fixing a mirror to said base plate via said adhesive layer, which is hardening after cooling.

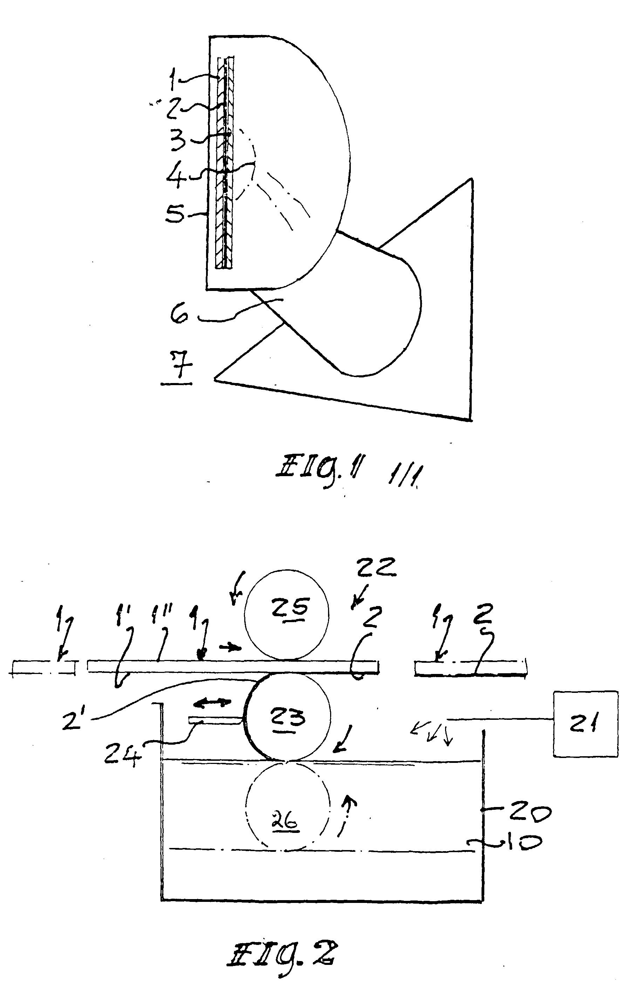

An embodiment of the present invention will now be described, by way of example, with reference to the accompanying drawings, in which:-
Figure 1 shows a sectional side view of an external rear view mirror, manufactured in accordance with the present invention; and
Figure 2 illustrates a method of manufacture of a rear view mirror in accordance with the present invention.

The rear view mirror for automotive vehicles, includes a mirror 1, which provides the rear view; and an adhesive 2 provided on the rear portion 1' of the mirror 1. Certain types of mirrors comprise a base plate 3 to which the mirror is glued by the adhesive 2, the base plate being part of a tilting mechanism 4 of the mirror. In other types of mirror which do not comprise a base plate 3 the mirror 1 is assembled and glued directly onto the element(s) of the rear view mirror housing 5, in which case the adhesive means 2 acts only as a shatterproof device for the mirror 1.

The mirror 1 also comprises the mechanism 4 for either electrically or manually moving the mirror and base plate assembly and a housing 5 in which the mirror assembly, the mirror 1, the adhesive coating 2 and, as the case may be, the base plate 3 and the mechanism 4 are housed. The mirror 1 also includes a base 6 which extends from the housing element 5 and is used to fix the housing to the body of the vehicle.

The adhesive material 2 is intended to fix the mirror 1 to the base plate 3 or to form a shatterproof device for the mirror 1, and instead of being a double faced adhesive tape, as conventionally used, is formed by a layer of "hot-melt" type adhesive, which is applied when hot and which, after cooling, fixes the mirror 1 to the base plate 3, or constitutes a shatterproof element if no base plate is used. Even if a base plate 3 is used the adhesive will still act as a shatterproof element. The method of applying the hot-melt adhesive material includes: (a) the continuous moving of the mirror 1 through the mirror feeding stations; so as to apply the adhesive to the mirrors; thus both gluing the mirror 1, with adhesive, to the respective base plates 3, if one is used; and the moving of the assembly to the next mirror assembling station, (b) providing the hot-melt type adhesive 10, duly melted and kept in a heater 20 at the adhesive application station, with sufficient capacity to serve the batch of mirrors to be manufactured, and which may be periodically fed with cold adhesive from a tank 21, in order to form a continuous production process, the heater 20 heating the adhesive to an ideal application temperature in the range 100°C to 250°C. The adhesive is applied by a receiving-dosing-application device 22.

The receiving dosing and applying of a portion 21 of the hot-melt adhesive to the rear face 1' of the mirror 1 to fix the mirror 1 to the base plate 3, or to form the shatterproof device is preferably carried out with receiving-dosing-applying equipment 22 formed from rotating cylinders comprising at least one first cylinder 23 for the receiving and application of a layer of the hot-melt adhesive 2' to the rear face 1' of the mirror 1; a dosing knife 24 placed at an adjustable distance close to the surface of the receiving-application cylinder 23 which receives the adhesive; and at least one second pulling and counter pressure cylinder 25 located above the receiving-application cylinder 23 and tangential to the mirror surface 1" of the mirror 1.

The mirror 1 is then attached via the melted hot-melt adhesive layer 2', to the base plate 3, and this assembly is moved or the mirror 1 with the shatterproof device, formed by the upper layer of the adhesive 2', is moved, to the subsequent stages of the process.

This form of construction of the mirror and its assembly are much more suitable to the requirements of a modern manufacturing line, than the conventional form using an adhesive tape. Also, the quality of the finished product is independent of the qualification of the staff employed, which assures that the specifications required by the manufacturers and the legal standards for the rear view mirror are met. This method of construction of a rear view mirror is also quite cost effective making it suitable for the manufacture of this type of component for an automotive vehicle.

The hot-melt adhesive used is adapted to provide a union between the mirror 1 and the base plate 3 and/or to form a shatterproof device capable of complying with the specifications of the vehicle manufacturers and with the legal standards relative to the shatterproofing of a mirror upon impact.

Modifications may be incorporated without departing from the scope of the present invention. For example, the rearview mirror may be either an external or internal one, of the different types normally used in automotive vehicles, namely: light commercial vehicles, station wagons, trucks, buses or others. Also, the hot-melt adhesive may have different compositions, intended to provide the cementing and/or the shatterproofing with the above mentioned characteristics and/or to comply to other requirements depending upon the type of rearview mirror and/or of the vehicle which will receive it, and/or the environment where it will be used and/or of other parameters.

Finally, the application means of the hot-melt adhesive, if so wanted and/or if necessary, may be different from the application cylinders mentioned above.

In one embodiment, the adhesive applying cylinder assembly may be formed by three different cylinders; consisting of the receiving-application cylinder 23, the pulling and counter-pressure cylinder 25, and a transference cylinder 26 for transferring hot-melt adhesive 10 to the receiving-application cylinder 23.

In another embodiment, the adhesive application device may have a transportation liner, which receives the adhesive, with the adhesive layer incorporated to the liner being applied to the rear surface of the mirror. The liner is then detached and the adhesive remains incorporated to the mirror, which is then glued to the base plate and/or forms the shatterproofing device.

Optionally, other types of adhesive may be used, such as those of polyurethane and silicone base, with the use of a hot-melt element as an agent to assure the initial adhesion, during the curing period of said other adhesives.

In another possibility, instead of applying the hot-melt adhesive to the mirror 1 as described above, it is possible to apply it to the base plate 3 or to the housing, which are then glued to the mirror 1.

## Claims

1. A rear view mirror comprising: a mirror (1), which provides the rear view; an adhesive (2) provided on the rear face (1') of the mirror (1); a housing (5); a mirror moving mechanism (4) for moving the mirror in the housing (5); and a base (6) which extends from the housing (5) and serves to fix the housing to the body of a vehicle (7) with which the mirror is to be used, characterized in that the adhesive (2) comprises a layer of a hot-melt type adhesive, which is applied hot and which, after cooling, provides the fixing of the mirror (1) in said housing (5).

2. A mirror as claimed in claim 1, wherein the layer of hot-melt adhesive (2) also acts as a shatterproofing element of the mirror (1).

3. A mirror as claimed in claim 1 or 2, wherein the mirror (1), is fixed to a base plate (3) in the housing (5) by said hot-melt adhesive layer (2).

4. A method of assembly of a rear view mirror, comprising: the movement of a mirror (1) through a mirror feeding station in which an adhesive (2) is applied to the rear face (1') of the mirror (1); characterised in that the adhesive (2) is formed by a layer of hot-melt adhesive which is applied to said rear face (1") as said mirror (1) is moved continuously through said station, said adhesive layer (2) hardening after cooling.

5. A method as claimed in claim 4, wherein the mirror (1) is fixed, via the adhesive layer (2'), to a base plate (3).

6. A method as claimed in claim 4 or 5, wherein the adhesive (10) is melted and kept in a heated container (20), at an adhesive application station, which may be periodically fed with cold adhesive from a tank (21), in order to form a continuous production process; said heated container (20) providing the heating of the adhesive to an ideal application temperature, the adhesive being provided to a receiving- dosing-applying device (22), so as to apply the adhesive to the mirror (1).

7. A method as claimed in claim 6, wherein the temperature of the hot-melt type adhesive lies between 100°C and 250°C.

8. A method as claimed in claim 6 or 7, wherein the adhesive is applied by the receiving-dosing-applying device (22) which is of the type formed preferably by applying cylinders, formed by a set of rotary cylinders with at least one first cylinder (23) for the receiving and application of a layer of the melted hot-melt adhesive (2') to the rear face (1') of the mirror (1); a dosing knife (24) placed at an adjustable distance close to the surface of the receiving-application cylinder (23) which receives the adhesive, and at least one second pulling and counter pressure cylinder (25), located above the receiving application cylinder (23) and tangent to the mirror surface (1") of said mirror (1).

9. A method as claimed in claim 8, wherein the set of rotary cylinders include a receiving and application cylinder (23), a transference cylinder (26), and a counter-pressure and pulling cylinder (25).

10. A method as claimed in claim 6 or 7, wherein the adhesive is applied by the receiving-dosing-applying device (22) which includes a transportation liner, which receives the adhesive, with the adhesive layer incorporated to the liner being applied to the rear face (1') of the mirror (1), the liner is detached and the adhesive remains incorporated to the mirror.

11. A method of assembly of a rear view mirror comprising the steps of:- applying a layer of a hot-melt adhesive (2) to a base plate (3), and fixing a mirror (1) to said base plate (3) via said adhesive layer (2), which is hardening after cooling.

## Patentansprüche

1. Rückspiegel, folgendes umfassend: einen Spiegel (1), der eine Rückansicht bietet; ein Klebemittel (2), das auf der Rückseite (1') des Spiegels (1) bereitgestellt wird; ein Gehäuse (5); einen spiegelbewegenden Mechanismus (4) zum Bewegen des Spiegels im Gehäuse (5); und eine Basis (6), die sich vom Gehäuse (5) erstreckt und dazu dient, das Gehäuse an der Karosserie eines Fahrzeuges (7) zu befestigen, mit dem der Spiegel zu verwenden ist, dadurch gekennzeichnet, daß das Klebemittel (2) eine Schicht eines Heißschmelzklebemittels umfaßt, die heiß aufgetragen wird und die nach dem Abkühlen für die Befestigung des Spiegels (1) im Gehäuse (5) sorgt.

2. Spiegel nach Anspruch 1, wobei die Schicht des Heißschmelzklebemittels (2) auch als splittervermeidendes Element des Spiegels (1) wirkt.

3. Spiegel nach Anspruch 1 oder 2, wobei der Spiegel (1) an einer Grundplatte (3) im Gehäuse (5) durch die Heißschmelzklebemittelschicht (2) befestigt wird.

4. Verfahren des Zusammenbaus eines Rückblickspiegels, folgendes umfassend: die Bewegung eines Spiegels (1) durch eine Spiegelzuführstation, in der ein Klebemittel (2) an der Rückseite (1') des Spiegels (1) angebracht wird; dadurch gekennzeichnet, daß das Klebemittel (2) durch eine Schicht eines Heißschmelzklebemittels gebildet wird, die auf die Rückseite (1') aufgetragen wird, während der Spiegel (1) kontinuierlich durch die Station bewegt wird, wobei sich die Schicht (2) nach dem Abkühlen erhärtet.

5. Verfahren nach Anspruch 4, wobei der Spiegel (1) über die Klebemittelschicht (2') an einer Grundplatte (3) befestigt wird.

6. Verfahren nach Anspruch 4 oder 5, wobei das Klebemittel (10) geschmolzen und in einem erwärmten Behälter (20) an einer Klebemittelauftragstation aufbewahrt wird, die periodisch mit kaltem Klebemittel von einem Tank (21) aus versorgt werden kann, um einen kontinuierlichen Produktionsprozeß zu bilden; wobei der erwärmte Behälter (20) für die Erwärmung des Klebemittels für eine ideale Auftragungstemperatur sorgt, wobei das Klebemittel an eine Aufnahmedosierauftragvorrichtung (22) weitergeleitet wird, um das Klebemittel auf den Spiegel (1) aufzutragen.

7. Verfahren nach Anspruch 6, wobei die Temperatur des Heißschmelzklebemittels zwischen 100°C und 250°C liegt.

8. Verfahren nach Anspruch 6 oder 7, wobei das Klebemittel durch die Aufnahmedosierauftragvorrichtung (22) aufgetragen wird, die von jener Art ist, die vorzugsweise durch Auftragzylinder gebildet wird, gebildet durch einen Satz an Drehzylindern mit mindestens einem ersten Zylinder (23) für die Aufnahme und das Auftragen einer Schicht des geschmolzenen Heißklebemittels (2') auf die Rückseite (1') des Spiegels (1); ein Dosiermesser (24), das in einer einstellbaren Entfernung in der Nähe der Oberfläche des Aufnahme-Auftragzylinders (23) angeordnet wird, der das Klebemittel aufnimmt, und mindestens einen zweiten Zieh- und Gegendruckzylinder (25), der über dem Aufnahme-Auftragzylinder (23) und tangierend zur Spiegeloberfläche (1") des Spiegels (1) angeordnet ist.

9. Verfahren nach Anspruch 8, wobei der Satz an Drehzylindern einen Aufnahme- und Auftragzylinder (23), einen Übertragungszylinder (26) und einen Gegendruck- und Ziehzylinder (25) einschließt.

10. Verfahren nach Anspruch 6 oder 7, wobei das Klebemittel durch die Aufnahmedosierauftragvorrichtung (22) aufgetragen wird, die einen Transportliner einschließt, der das Klebemittel aufnimmt, wobei die Klebemittelschicht, die im Liner eingebunden ist, an der Rückseite (1') des Spiegels (1) angebracht wird, der Liner entfernt wird und das Klebemittel am Spiegel bleibt.

11. Verfahren des Zusammenbaus eines Rückblickspiegels, folgende Schritte umfassend: Auftragen einer Schicht eines Heißschmelzklebemittels (2) auf eine Grundplatte (3) und Befestigen eines Spiegels (1) an dieser Grundplatte (3) über die Klebemittelschicht (2), die sich nach dem Abkühlen erhärtet.

## Revendications

1. Rétroviseur comprenant : un miroir (1) qui permet la vision arrière, un adhésif (2) prévu sur la face arrière (1') du miroir (1), un boîtier (5), un mécanisme (4) servant à déplacer le miroir pour déplacer le miroir dans le boîtier (5), et une embase (6) qui s'étend depuis le boîtier (5) et sert à fixer le boîtier à la carrosserie d'un véhicule (7) avec lequel le miroir doit être utilisé, caractérisé en ce que l'adhésif (2) comprend une couche d'adhésif du type thermofusible, qui est appliquée à chaud et qui, après refroidissement, permet la fixation du miroir (1) dans ledit boîtier (5).

2. Rétroviseur selon la revendication 1, dans lequel la couche d'adhésif thermofusible (2) agit également comme un élément de sécurité du miroir (1).

3. Rétroviseur selon la revendication 1 ou 2, dans lequel le miroir (1) est fixé sur une plaque de base (3) dans le boîtier (5) à l'aide de ladite couche adhésive thermofusible (2).

4. Procédé pour assembler un rétroviseur, comprenant : le déplacement d'un miroir (1) dans une station d'amenée de miroirs où un adhésif (2) est appliqué sur la face arrière (1') du miroir (1) ; caractérisé en ce que l'adhésif (2) est formé par une couche d'adhésif thermofusible qui est appliquée sur ladite face arrière (1") lorsque ledit miroir (1) est déplacé en continu dans ladite station, ladite couche adhésive (2) durcissant après refroidissement.

5. Procédé selon la revendication 4, dans lequel le miroir (1) est fixé, par l'intermédiaire de la couche adhésive (2') sur une plaque de base (3).

6. Procédé selon la revendication 4 ou 5, dans lequel l'adhésif (10) est fondu et gardé dans un récipient chauffé (20), dans une station d'application d'adhésif, qui peut être périodiquement alimentée en adhésif froid à partir d'un réservoir (21), afin de former un processus de production continu ; ledit récipient chauffé (20) permettant de chauffer l'adhésif à une température d'application idéale, l'adhésif étant placé sur un dispositif de réception-dosage-application (22), afin d'appliquer l'adhésif sur le miroir (1).

7. Procédé selon la revendication 6, dans lequel la température de l'adhésif du type thermofusible est comprise entre 100°C et 250°C.

8. Procédé selon la revendication 6 ou 7, dans lequel l'adhésif est appliqué à l'aide du dispositif de réception-dosage-application (22) qui est du type formé de préférence en appliquant des cylindres, formés par un ensemble de cylindres rotatifs avec au moins un premier cylindre (23) pour recevoir et appliquer une couche de l'adhésif thermofusible fondu (2') sur la face arrière (1') du miroir (1) ; une lame de dosage (24) placée à une distance réglable près de la surface du cylindre de réception-application (23) qui reçoit l'adhésif, et au moins un second cylindre de traction et de contre-pression (25), placé au-dessus du cylindre de réception-application (23) et tangent à la surface du miroir (1") dudit miroir (1).

9. Procédé selon la revendication 8, dans lequel l'ensemble de cylindres rotatifs comprend un cylindre de réception et d'application (23), un cylindre de transfert (26) et un cylindre de contre-pression et de traction (25).

10. Procédé selon la revendication 6 ou 7, dans lequel l'adhésif est appliqué par le dispositif de réception-dosage-application (22) qui comprend une chemise de transport, qui reçoit l'adhésif, la couche d'adhésif incorporée à la chemise étant appliquée sur la face arrière (1') du miroir (1), la chemise est détachée et l'adhésif est incorporé au miroir.

11. Procédé d'assemblage d'un rétroviseur comprenant les étapes consistant à :
appliquer une couche d'adhésif thermofusible (2) sur la plaque de base (3), et
fixer un miroir (1) sur ladite plaque de base (3) par l'intermédiaire de ladite couche d'adhésif (2), qui durcit après refroidissement.
